# EUROPEAN PATENT APPLICATION

(11) **EP 2 754 688 A1**
(43) Date of publication of application: **16.07.2014**
(21) Application number: 13151092.7
(22) Date of filing: 11.01.2013
(51) Int. Cl.: C08J 11/04, C08L 23/16

(54) **A composition, a method of manufacturing a composition and a surface covering**

(71) Applicant: Spanolux N.V. Div. Balterio, 8710 Sint-Baafs-Vijve (BE)
(72) Inventor: Vermeulen, Bruno Paul Louis, 3680 Aldeneik-Maaseik (BE)
(74) Representative: De Vries & Metman

(57) **Abstract**

A composition comprises at least propylene-based elastomer and polymer-containing waste of floor covering, preferably polypropylene-containing carpet waste. A surface covering in the form of a sheet, a panel, a tile or a plank, in particular for covering a floor, wall, or ceiling in interior or exterior application, comprises the composition.

## Description

The present invention pertains to a composition for use in a surface covering such as a sheet, a panel, a tile or a plank.

In the field of floorings, for example, panels or tiles of PVC or the like are known. There is a growing interest in using renewable and safe or non-toxic materials.

An object of the invention is to provide a composition which fulfils this requirement.

This is achieved by the composition according to the invention which is composed of at least propylene-based elastomer and polymer-containing waste of floor covering. Preferably the polymer-containing waste comprises polypropylene-containing carpet waste. The composition appears to be a surprising good intermediate product for making surface coverings, whereas the use of waste of floor covering results in a recycled product which contributes to a further development of renewability in the flooring industry. Particularly in the carpet industry it is advantageous to re-use the unavoidable waste in a carpet factory. In addition to post-industrial waste also the application of used floor coverings, i.e. post-consumer waste, is conceivable.

The composition may be in the form of a sheet, a panel, a tile, a plank, particles, powder, chips, granulates or the like.

The elastomer properties as defined in claims 2-5 appear to offer attributes of high elasticity, softness, toughness, flexibility and compatibility to a wide range of polymers, which is advantageous since the polymer types in the supply flow of polymer-containing waste of floor covering may vary significantly. The elastomer is also useful in terms of production efficiency since the amount of elastomer in the composition determines the viscosity of the composition at a certain temperature; this provides the opportunity to influence the speed of manufacturing products of the blend. Furthermore, the used elastomer does not require the application of PVC or other undesired plasticizers or phthalates. Therefore, the composition is preferably free of halogens and/or PVC and/or plasticizers.

The composition according to the invention appears to be advantageous in terms of further processing and production steps, such as cutting and profiling. Due to the fact that the composition has a high degree of filling capacity and a very high degree of flexibility it suffers less from the so called "memory effect" than for example conventional PVC panels. Furthermore, when burnt the composition has lower smoke and lower carbon monoxide gas generation than conventional PVC or polyolefin compositions for floor coverings.

The waste of floor covering may come from new pieces of carpet from the carpet industry or used carpets or the like, but it may also come from floor panels which have been made from the composition that is defined in claim 1 and should be recycled, for example. In the latter case the waste of floor covering already contains propylene-based elastomer and in a manufacturing process only a little additional propylene-based elastomer should be added to create a new composition.

The composition may also contain a filler in addition to the propylene-based elastomer and the waste of floor covering. The quantities of the components may be different as defined in claim 7, whereas the filler may comprise different types of polymer-free substances as defined in claim 8. The filler may also come from waste of floor covering, for example wood flour may be collected from sawdust in a factory of floor panels including wood-containing substrates. It is noted that the polymer-containing waste of floor covering itself may also contain a non-polymer filler like chalk, clay, or the like.

Furthermore, the composition may also comprises 1-5% of a foaming agent, preferably about 3%.

Claim 9 defines that the carpet waste may comprises a mixture of carpet pile, chalk-containing and latex-containing coating, chalk-containing and latex-containing adhesive, and felt. The felt may contain polyamide, polypropylene, PET, PE or the like. The carpet backing fabric or tuft sheet may also contain polyamide, polypropylene, PET, PE or the like. The carpet waste may be a mixture of polypropylene, spin finish, calcium carbonate, carbon black, foaming agent, thickener, emulsifier, humidifier and the like. Other waste flows are conceivable comprising polyolefin, polyethylene, ethylene propylene, olefin copolymers, polyamide, carpet comprising an olefin backing with nylon faced yarn, carpet comprising olefin backing with olefin faced yarn, glass beads, fly ash, gypsum or any combination thereof.

In an alternative embodiment the carpet waste contains 40-70 wt% polyamide or 40-70 wt% PET or 40-70% wt% acryl or 40-70 wt% plastic fibers.

The invention is also related to a method of manufacturing a composition as defined in claim 11. The resulting product of the composition can be a sheet, a panel, a tile or a plank, but alternative products having different shapes are conceivable. The mixture of elastomer and waste can also be applied onto a substrate and pressed together with the substrate. The substrate may comprise a panel of HDF, MDF, WPC or engineered polymer.

A filler may be added to the elastomer and waste and the entire mixture may be pressed under elevated heat. The components may be supplied in the form of particles, granulates, powder, or the like. In order to create a decorative appearance of the resulting product it is possible to add additional substances to the composition before pressing, for example pigments, coloured particles, anti-wear particles or chips or the like. Such substances may be scattered on a layer of the composition before pressing such that only a portion of the layer is provided with the additional substances. Furthermore, the waste of floor covering itself may comprise propylene-based elastomer, wherein less than 10 wt% of propylene-based elastomer and more than 90% waste is supplied.

The invention is also related to a surface covering in the form of a sheet, a panel, a tile or a plank, in particular for covering a floor, wall, or ceiling in interior or exterior application, comprising the composition as described hereinbefore or comprising a composition of at least propylene-based elastomer and one of a polymer-free substance and a polymer-containing substance.

The surface covering may have a thickness of 2-6 mm, and preferably about 4 mm, or the surface covering may have a thickness of 1-3 mm, and preferably between 1.5 and 2 mm.

The polymer-free substance may comprise at least one of chalk, talc, mica, calcium carbonate, carbon black, barite, barium sulphate, clay, limestone, kaolin, silica, glass and wood flour or the like.

The polymer-containing substance may comprise at least one of polypropylene, polyamide and PET, whereas the polymer-containing substance may also comprise a filler.

The propylene-based elastomer in the surface covering may be composed of isotactic propylene repeat units with random ethylene distribution forming a semicrystalline structure, and wherein preferably the semicrystalline structure is formed by amorphous regions in the polypropylene sequences. The propylene-based elastomer may contain 8-16 wt% ethylene according to the EMCC method. The propylene-based elastomer may have a melt flow rate (MFR) of 2-300 g/10 min at 230 °C/2,16 kg according to ASTM D 1238.

A cover layer may be attached to the composition. The cover layer may be composed of a propylene-based elastomer and at least one of a polypropylene containing material and a filler. It is noted that the composition of the surface covering may be covered by any polymer or non-polymer cover layer. Any polymeric coating or sheet, or alternative materials like paper sheet or the like, are conceivable. Sheets may be laminated are glued to the composition, for example.

Furthermore, the surface covering may be provided with a decorative layer and/or an anti-wear layer and/or a reinforcement layer and/or a balancing layer. The surface covering may function as a backing to which additional layers such as a sheet, a panel, a woven or non-woven web, carpet, or the like are attached, for example by means of glue, laminating or the like. The anti-wear layer may comprise an unsaturated functional acrylate and aluminium oxide particles; the anti-wear layer can be disposed on top of a decorative layer and cured by electron beam or radiation.

In a preferred embodiment the surface covering is provided with connecting means for connecting the surface covering to another surface covering. This provides the opportunity to install surface coverings without glue. For example, side edges of the surface coverings may be provided with cooperating tongues and grooves. The connecting means may be provided at the composition, but it is also conceivable that the connecting means are provided outside the composition.

The composition of the surface covering may be coated with a polyurethane acrylate. It appears that the combination of the composition as described hereinbefore and the coating of polyurethane acrylate leads to excellent product characteristics of the surface covering, in particular in relation to bending characteristics of floor panels. In the field of floor panels, for example, it is important that the appearance of a floor panel does not change after the panel was bent during laying a flooring an has returned back to its original shape. Furthermore, the composition and the polyurethane acrylate coating appear to be very compatible such that they show a strong adherence.

The polyurethane acrylate may be an aliphatic and/or aromatic polyurethane acrylate and can be diluted with reactive diluent, preferably between 0 and 50 wt%.

The reactive diluent may be at least of isoamyl acrylate, stearyl acrylate, lauryl acrylate, octyl acrylate, decyl acrylate, isoamylstyl acrylate, isostearyl acrylate, 2-ethylhexyl-diglycol acrylate, 2-hydroxybutyl acrylate, 2-acryloyloxyethylhexahydrophthalic acid, butoxyethyl acrylate, ethoxydiethylene glycol acrylate, methoxydiethylene glycol acrylate, methoxypolyethylene glycol acrylate, methoxypropylene glycol acrylate, phenoxyethyl acrylate, tetrahydrofurfuryl acrylate, isobornyl acrylate, 2-hydroxyethyl acrylate, 2-hydroxypropyl acrylate, 2-hydroxy-3-phenoxypropyl acrylate, vinyl ether acrylate, 2-acryloyloxyethylsuccinic acid, 2-acryloyxyethylphthalic acid, 2-acryloxyethyl-2-hydroxyethylphthalic acid, lactone modified flexible acrylate, and t-butylcyclohexyl acrylate, triethylene glycol diacrylate, tetraethylene glycol diacrylate, polyethylene glycol diacrylate, dipropylene glycol diacrylate, tripropylene glycol diacrylate, polypropylene glycol diacrylate, 1,4-butanediol diacrylate, 1,6-hexanediol diacrylate, 1,9-nonanediol diacrylate, neopentyl glycol diacrylate, dimethylol-tricyclodecane diacrylate, bisphenol A EO (ethylene oxide) adduct diacrylate, bisphenol A PO (propylene oxide) adduct diacrylate, hydroxypivalate neopentyl glycol diacrylate, propoxylated neopentyl glycol diacrylate, alkoxylated dimethyloltricyclodecane diacrylate and polytetramethylene glycol diacrylate, trimethylolpropane triacrylate, EO modified trimethylolpropane triacrylate, tri (propylene glycol) triacrylate, caprolactone modified trimethylolpropane triacrylate, pentaerythritol triacrylate, pentaerithritol tetraacrylate, pentaerythritolethoxy tetraacrylate, dipentaerythritol hexaacrylate, ditrimethylolpropane tetraacrylate, glycerinpropoxy triacrylate, and caprolactam modified dipentaerythritol hexaacrylate, or an N-vinylamide such as, N-vinylcaprolactam or N-vinylformamide ; or acrylamide or a substituted acrylamide, such as acryloylmorpholine.

Other suitable monofunctional acrylates include caprolactone acrylate, cyclic trimethylolpropane formal acrylate, ethoxylated nonyl phenol acrylate, isodecyl acrylate, isooctyl acrylate, octyldecyl acrylate, alkoxylated phenol acrylate, tridecyl acrylate and alkoxylated cyclohexanone dimethanol diacrylate.

Other suitable difunctional acrylates include alkoxylated cyclohexanone dimethanol diacrylate, alkoxylated hexanediol diacrylate, dioxane glycol diacrylate, dioxane glycol diacrylate, cyclohexanone dimethanol diacrylate, diethylene glycol diacrylate and neopentyl glycol diacrylate.

Other suitable trifunctional acrylates include propoxylated glycerine triacrylate and propoxylated trimethylolpropane triacrylate.

Other higher functional acrylates include ditrimethylolpropane tetraacrylate, dipentaerythritol pentaacrylate, ethoxylated pentaeryhtitol tetraacrylate, methoxylated glycol acrylates and acrylate esters.

Furthermore, methacrylates corresponding to the above-mentioned acrylates may be used with these acrylates. Of the methacrylates, methoxypolyethylene glycol methacrylate, methoxytriethylene glycol methacrylate, hydroxyethyl methacrylate, phenoxyethyl methacrylate, cyclohexyl methacrylate, tetraethylene glycol dimethacrylate, and polyethylene glycol dimethacrylate.

The invention will hereafter be elucidated by means of the following example, which is not limiting to the scope of the claims.

A surface covering in the form of a panel of a thickness of 5 mm is manufactured by supplying carpet waste that contains 32 wt% of carpet pile, 25 wt% of chalk-containing and latex-containing coating, 17 wt% of chalk-containing and latex-containing adhesive; 15 wt% of polypropylene-containing tuft sheet and 11 wt% of polypropylene-containing felt. The carpet waste is ground to a powder and mixed with a propylene-based elastomer. The propylene-based elastomer is composed of isotactic propylene repeat units with random ethylene distribution forming a semicrystalline structure and contains 12 wt% ethylene according to the EMCC method.

Furthermore, a filler in the form of chalk powder is added to the mixture of propylene-based elastomer and the ground carpet waste. The quantities of the components are 20 wt% of propylene-based elastomer, 30 wt% of carpet waste and 50 wt% of chalk.

The resulting powder mixture is scattered onto a double-belt press which is heated to about 250 °C and generates a pressure of about 3 bar. After cooling, the resulting panel can be sanded and/or treated by means of alternative surface treatments. Additionally, one or more coatings can be attached to the resulting panel.

Due to the composition as described hereinbefore the panel may have a relatively low surface energy level. This can be raised by means of a plasma, corona, or pyrolysis treatment for improved adherence properties with a coating that can be applied onto the panel, for example.

The composition of the surface covering may be provided with a decoration pattern. This can be applied directly onto the composition or on a coating that is attached to the composition.

A decor layer, also called a printed visual, can comprise a gravure print, a digital print, a flexo print, a transfer print, a pad print, a stamping print, a decorative painting, or any combination thereof. Any conventional printing means can be used to produce the decor layer. The printed visual on the decor layer can have any pattern, such as, but not limited to, simulated natural surfaces, such as natural wood, stone, tile, marble, granite, brick appearance, or the like. As a non-limiting example, a decor layer comprises a design layer that has chemically or mechanically embossed textures in register so as to simulate such features found in natural surfaces (e.g., grout lines, wood grain, wood knots, ceramic surface textures, and the like). Any ink composition can be used, such as those that contain an acrylic resin, water, alcohol, and one or more pigments. A design can be done in register using multiple station rotogravure printing.

The decor layer can include a substrate, wherein the substrate can comprise one or more polymer films and/or paper sheets. Preferably, the plastic film does not contain halogenated materials. The film could provide excellent dimensional stability against product growth or shrinkage which can exist due to moisture or humidity from the environment. These films may be selected from thermoplastic films, such as acrylic, polyolefin, ionomer, and polyester. Alternatively, a cellulose base paper can be used as the substrate for the decor layer. If cellulose base paper is used, the moisture content of the paper should be controlled or limited to a very low level, impregnating or saturation of the paper with non-humid, resins, acrylates, or the like, prior to sealing the paper with coatings. This would prevent any dimensional change of the paper due to absorbing moisture from or releasing moisture to the environment. Thus, dimensional changes to a laminated structure, such as, bowing, doming, curling or warping, can be prevented. Other types of film or materials for the decor layer are possible.

## Claims

1. A composition of at least propylene-based elastomer and polymer-containing waste of floor covering, preferably polypropylene-containing carpet waste.

2. A composition according to claim 1, wherein the propylene-based elastomer is composed of isotactic propylene repeat units with random ethylene distribution forming a semicrystalline structure.

3. A composition according to claim 2, wherein the semicrystalline structure is formed by amorphous regions in the polypropylene sequences.

4. A composition according to claim 2 or 3, wherein the propylene-based elastomer contains 8-16 wt% ethylene according to the EMCC method.

5. A composition according to one of the preceding claims, wherein the propylene-based elastomer has a melt flow rate (MFR) of 2-300 g/10 min at 230 °C/2,16 kg according to ASTM D 1238.

6. A composition according to one of the preceding claims, wherein the composition contains at least 10-50 wt% of propylene-based elastomer.

7. A composition according to one of the preceding claims, wherein the composition also comprises a filler, such that the composition contains:
10-50 wt% of propylene-based elastomer;
20-60 wt% of waste of floor covering;
10-70 wt% of filler,
and preferably:
15-25 wt% of propylene-based elastomer;
25-35 wt% of waste of floor covering;
40-60 wt% of filler,
wherein the sum of propylene-based elastomer, waste of floor covering and filler is 100 wt%.

8. A composition according to claim 7, wherein the filler comprises chalk, talc, mica, calcium carbonate, carbon black, barite, barium suplhate, clay, limestone, kaolin, silica, glass, or wood flour.

9. A composition according to one of the preceding claims, wherein the waste of floor covering is formed by carpet waste that comprises a mixture of carpet pile, carpet backing fabric, coating, adhesive and felt, and preferably:
30-35 wt% of carpet pile;
20-30 wt% of chalk-containing and latex-containing coating;
15-20 wt% of chalk-containing and latex-containing adhesive;
10-20 wt% carpet backing fabric;
5-15 wt% of felt.

10. A composition according to one of the preceding claims, wherein the waste of floor covering is formed by carpet waste that contains:
45-65 wt% of polypropylene;
30-50 wt% of chalk;
1-10 wt% of latex;
and optionally less than 5% of at least one of the substances spin finish, thickener, emulsifier and humidifier.

11. A method of manufacturing a composition according to one of the claims 1-10, comprising the steps of:
supplying propylene-based elastomer;
supplying polymer-containing waste of floor covering, preferably polypropylene-containing carpet waste,
wherein the elastomer and waste are provided in the form of particles, which are mixed and pressed together at elevated temperature.

12. A surface covering in the form of a sheet, a panel, a tile or a plank, in particular for covering a floor, wall, or ceiling in interior or exterior application, comprising the composition of one of the claims 1-11.

13. A surface covering in the form of a sheet, a panel, a tile or a plank, in particular for covering a floor, wall, or ceiling in interior or exterior application, comprising a composition of at least propylene-based elastomer and one of a polymer-free substance and a polymer-containing substance.

14. A surface covering according to claim 13, wherein the composition contains the polymer-free substance and 5-50% propylene-based elastomer, preferably 10-40% propylene-based elastomer, and more preferably 20-30% propylene-based elastomer.

15. A surface covering according to claim 13, wherein the composition contains the polymer-containing substance and 5-50% propylene-based elastomer, preferably 10-40% propylene-based elastomer, and more preferably 20-30% propylene-based elastomer.

16. A surface covering according to one of the claims claims 12-15, wherein at least a cover layer is attached to the composition, wherein the cover layer is composed of a propylene-based elastomer and at least one of a polypropylene containing material and a filler.

17. A surface covering according to one of the claims claims 12-15, wherein the composition is coated with a layer of polyurethane acrylate.
